Europäisches Patentamt

European Patent Office

Office européen des brevets

(11) Publication number: **0 375 116 B1**

## EUROPEAN PATENT SPECIFICATION

(45) Date of publication of patent specification: **01.09.93**  (51) Int. Cl.⁵: **G06F 3/033**

(21) Application number: **89309795.6**

(22) Date of filing: **26.09.89**

(54) **Input device and method for a document-preparing system.**

(30) Priority: **26.09.88 JP 241294/88**

(43) Date of publication of application:
**27.06.90 Bulletin  90/26**

(45) Publication of the grant of the patent:
**01.09.93 Bulletin  93/35**

(84) Designated Contracting States:
**DE GB**

(56) References cited:

PATENT ABSTRACTS OF JAPAN, vol. 12, no. 104 (P-685), 6th April 1988; & JP-A-62 236 025 (NEC ENG. LTD) 16-10-1987

PATENT ABSTRACTS OF JAPAN, vol. 10, no. 254 (P-492), 30th August 1986; & JP-A-61 080 421 (USAC ELECTRONICS IND, CO., LTD) 24-04-1986

PATENT ABSTRACTS OF JAPAN, vol. 11, no. 350 (P-637), 17th November 1987; & JP-A-62 128 320 (TOSHIBA CORP.) 10-06-1987

(73) Proprietor: **SHARP KABUSHIKI KAISHA
22-22 Nagaike-cho Abeno-ku
Osaka 545(JP)**

(72) Inventor: **Yamamoto, Yasushi
3-13-103, 2-chome, Ukyo
Nara-shi Nara-ken(JP)**
Inventor: **Fujimura, Shigeru
3-6-203, 2-chome Omiya-cho
Nara-shi Nara-ken(JP)**
Inventor: **Nakane, Futoshi
4-201-1, Minamikyobate-cho
Nara-shi Nara-ken(JP)**
Inventor: **Nagaya, Toshikazu
492, Minosho-cho
Yamatokoriyama-shi Nara-ken(JP)**
Inventor: **Harada, Shigeaki
19-9, 4-chome, Tezukayamaminami
Nara-shi Nara-ken(JP)**
Inventor: **Takiguchi, Yasuhiro
6-15-209, 1-chome
Jingu Nara-shi, Nara-ken(JP)**

(74) Representative: **Brown, Kenneth Richard et al
R.G.C. Jenkins & Co. 26 Caxton Street
London SW1H 0RJ (GB)**

## Description

## FIELD OF THE INVENTION

The present invention relates to a document preparing system having a user-manipulable input device, hereinafter called a clicking input device, such as a mouse, for a computer, a word-processor or the like.

## BACKGROUND OF THE INVENTION

A clicking input device such as a mouse is generally used as an input device for office machines typically represented by computers. The combination of such a clicking input device with a display device enables the operator to carry out an interactive processing with respect to a machine. More specifically, the operator may operate a mouse cursor on the display device by operating a mouse by hand. The mouse cursor is moved according to the movement of the mouse as if the movement of the mouse is associated directly with the movement of the mouse cursor. This enables the operator to concentrate his attention on the screen of the display device.

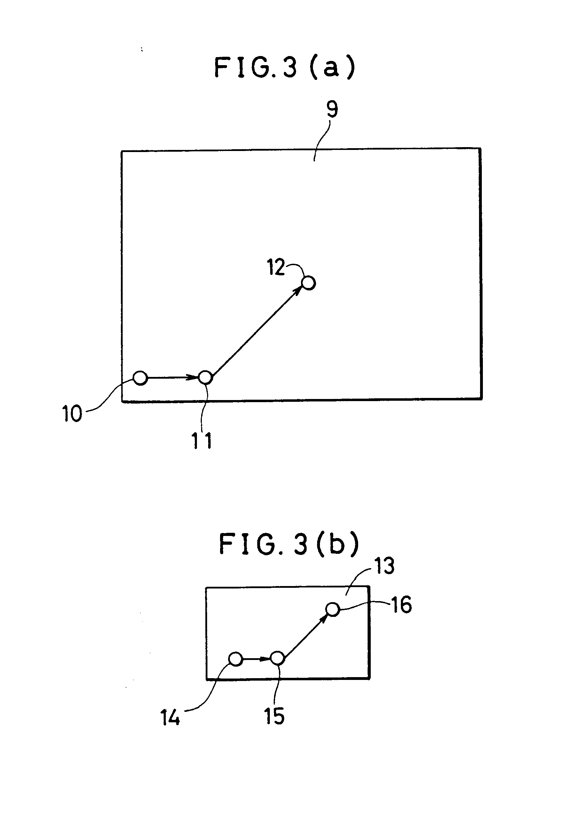

Fig. 3 shows a method of moving a mouse cursor with the use of a mouse in a conventional document preparing system; Fig. 3 (b) illustrates the movement of the mouse on a mouse input board 13, and Fig. 3 (a) illustrates the corresponding movement of the mouse cursor on a display screen 9.

The moving amount of the mouse has no relation to time. For example, the movement of the mouse from a position 14 to a position 15, or from the position 15 to a position 16 is reflected, as it is, on the display device 9. Such movement is displayed as the movement of the mouse cursor from a position 10 to a position 11, or from the position 11 to a position 12. At this time, even though the mouse is moved from the position 15 to the position 16 at a speed higher than that at which the mouse is moved from the position 14 to the position 15, the movement of the mouse cursor from the position 11 to the position 12 is not carried out at a speed higher than that of the mouse cursor movement from the position 10 to the position 11. That is, regardless of the mouse moving amount, the mouse cursor is moved by an amount in which the mouse movement amount is multiplied by a constant. It is therefore difficult to efficiently achieve both fine and broad movements of the mouse.

More specifically, the mouse cursor moving method in a conventional document preparing system is of the linear type in which the movement of the mouse cursor on the display device corresponding to the mouse operation by the operator, is in function of only the amount of mouse movement on the mouse input board. Accordingly, it is difficult to closely reproduce the user's operation feeling that a fine operation is slowly made, while a rough operation is quickly made. This is particularly disadvantageous in a bit map display having a high resolution.

From JP-A-62-236025, there is known a cursor control system in which the cursor moving amount is calculated according to the sum of a value proportional to the moving amount of the mouse and a value proportional to the product of the moving amount and the speed of the mouse. The calculation necessitates a hardware structure which is undesirably complicated and costly.

## SUMMARY OF THE INVENTION

It is an object of the present invention to provide a document preparing system in which the mouse cursor may be precisely designated or positioned in a fine area on a display device by operating the mouse slowly and finely, while the mouse may be quickly moved to a remote position so that the per-unit-time moving amount of the mouse cursor may be increased.

It is another object of the present invention to provide a document preparing system capable of closely reproducing the operation feeling that a fine movement of the mouse is slowly made while a rough movement of the mouse is quickly made, thereby to improve a smooth operational effectiveness.

To achieve the above-mentioned objects, in one aspect, the present invention provides a document preparing system for controlling movement of a cursor on the screen of a display device in dependence upon movement on a surface of a user-manipulable input device including a clicking input device such as a mouse, the system comprising:

input processing means for detecting the per-unit-time moving amount of the input device as an integer number m;

correction calculation means for calculating a correction value according to the equation:

$$\Sigma\, m_i \text{ for } m_i > 0,$$

where $m_i = m - iN$, $i = 1, 2, 3, ...$ and N is a predetermined threshold value of said per-unit-time device moving amount m, said correction value being zero for $m \leq N$; and

cursor moving amount calculation means for calculating the per-unit-time moving amount of said cursor on the display screen by addition of said correction value to said per-unit-time device moving amount m.

In another aspect, the invention provides a method for controlling movement of a cursor on the screen of a display device as defined in the appended claim 6.

According to the above-mentioned arrangement, when the per-unit-time mouse moving amount is small, the per-unit-time mouse cursor moving amount is linearly proportional to the per-unit-time mouse moving amount. When the per-unit-time mouse moving amount is great, the per-unit-time mouse cursor moving amount is so corrected as to be further increased.

## BRIEF DESCRIPTION OF THE DRAWINGS

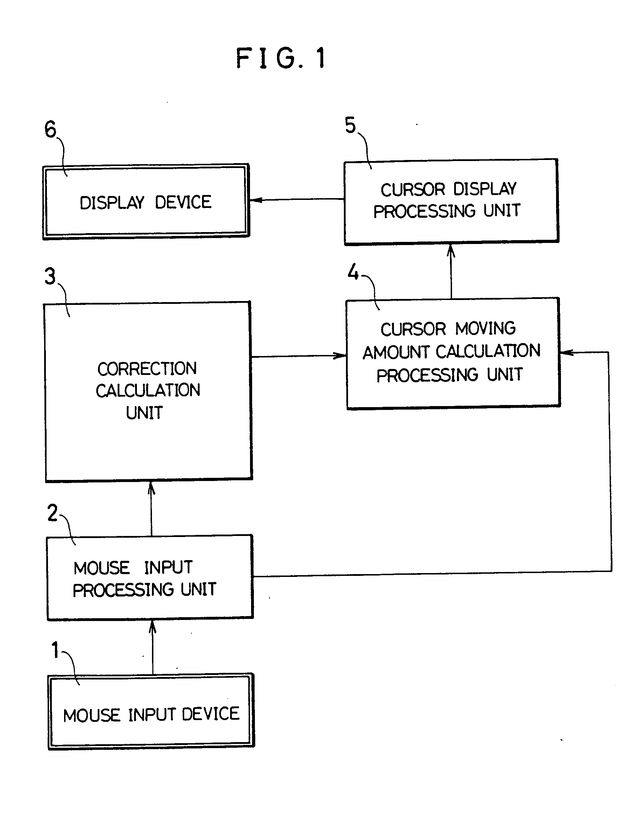

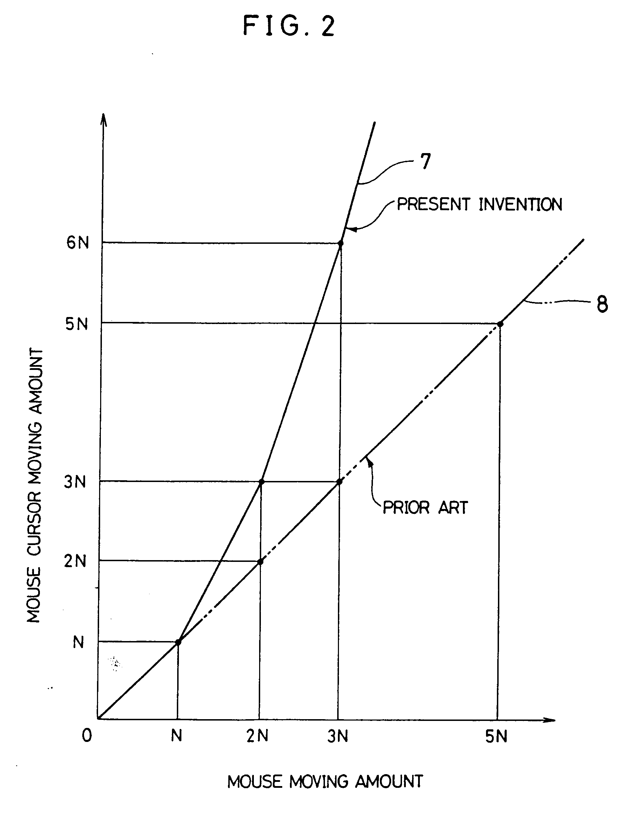

Figures 1 and 2 show an embodiment of the present invention;

Figure 1 is a block diagram of the arrangement of the present invention;

Figure 2 is a graph showing the per-unit-time moving amount of a mouse cursor corresponding to the per-unit-time moving amount of a mouse, according to each of the present invention and a conventional system; and

Figure 3 shows how a mouse cursor movement corresponds to a mouse movement according to a conventional system; Figure 3 (a) showing a display device, and Figure 3 (b) showing a mouse input device.

## DESCRIPTION OF THE EMBODIMENTS

The following description will discuss an embodiment of the present invention with reference to Figs. 1 and 2.

As shown in Fig. 1, processing is made such that a per-unit-time mouse moving amount $m$ entered from a mouse input device 1 is sent to a mouse input processing unit 2, as input processing means, in which a calculation of (m1 = m - N) is carried out and the result value m1 (information to be used for calculation for correction) is sent to a correction calculation unit 3 as correction calculation means. Here, N is a threshold constant of the per-unit-time mouse moving amount $m$. Processing is also made such that the per-unit-time mouse moving amount $m$ is sent to a cursor moving amount calculation processing unit 4 which constitutes mouse cursor moving amount calculation means. The per-unit-time mouse moving amount $m$ is the total sum of pulses having a predetermined frequency which are generated from a pulse generator (not shown) during a predetermined period of time. Accordingly, it may be judged that the mouse moving speed is higher as the moving amount $m$ is greater. When m1 is positive, the correction calculation unit 3 further executes a correction processing to be discussed later, and the corrective value thus obtained is sent to the cursor moving amount calculation processing unit 4. When m1 is equal to 0 or negative, the corrective value sent from the correction calculation unit 3 to the cursor moving calculation processing unit 4, is equal to 0. In the cursor moving amount calculation processing unit 4, the corrective value obtained from the correction calculation unit 3 is added to the per-unit-time moving amount $m$ obtained from the mouse input processing unit 2. The resultant value this added is sent, as a per-unit-time mouse cursor moving amount, to a cursor display processing unit 5. In the cursor display processing unit 5, the per-unit-time mouse cursor moving amount sent from the cursor moving amount calculation processing unit 4 is added to a value representing the position of the mouse cursor located immediately before the mouse is operated. Thus, there is obtained a mouse cursor position on a display device 6. The mouse cursor is then actually moved to the position thus obtained. When m1 is positive, the correction processing in the correction calculation unit 3 is made as outlined below.

When m2 is equal to (m1 - N), and m3 is equal to (m2 - N) and so on, (m1 + m2 + m3 + ...) is used as a corrective value (where m1, m2, m3 ... are positive). Accordingly, as the per-unit-time mouse moving amount $m$ is greater, the corrective value is greater. As the result, the per-unit-time mouse cursor moving amount is further increased.

For example, when the per-unit-time mouse moving amount $m$ is equal to a value in a range from 1 to N, $m_1$, i.e. (m - N) is equal to or smaller than 0. Accordingly, the mouse moving amount $m$ represents, as it is, the mouse cursor moving amount. When $m$ is a value in a range from (N + 1) to 2N, m1 is equal to (m - N) which is equal to (N + 1 - N) which is equal to 1, where $m$ is equal to (N + 1). Therefore, m2 is equal to $m_1$ - N, i.e. (1 - N) which is smaller than zero. The corrective value is thus $m_1$ = 1 and the mouse cursor moving amount is m + $m_1$, i.e. N + 2. On the other hand, where $m$ is equal to 2N, m1 is equal to (m - N) which is equal to (2N - N) which is equal to N. Therefore, m2 is equal to $m_1$ - N, i.e. (N - N) which is equal to zero. Accordingly, the corrective value is equal to m1, i.e. N. As the result, the mouse cursor moving amount is equal to (m + m1), i.e. 2N + N = 3N. Likewise, the corrected value of the mouse cursor moving amount is equal to (m + m1 + m2) when $m$ is in a range from (2N + 1) to 3N. Thus, the mouse cursor moving amount may be successively corrected such that, as the per-unit-time mouse moving amount $m$ is greater, the corrective value becomes greater and the per-unit-time mouse cursor moving amount on the actual screen of the display device is also greater.

Fig. 2 shows the relationship between the mouse moving amount (on the axis of abscissa) and the mouse cursor moving amount (on the axis of ordinate). In Fig. 2, the mouse cursor movement in the document preparing system in accordance with the present invention is shown by a solid line 7, while a conventional movement is shown by a two-dot chain line 8 as a comparative example.

For example, when the per-unit-time mouse moving amount $\overline{m}$ is equal to the threshold constant N, the per-unit-time mouse cursor moving amounts in the present invention and the conventional method are equal to N. That is, the mouse cursor on the display device according to the present invention is moved at the same speed as that in the conventional method. When the per-unit-time mouse moving amount $\overline{m}$ is equal to 3N, the mouse cursor moving amount $\overline{i}$ is equal to 3N in the conventional method, while it is equal to 6N in the present invention. That is, the mouse cursor on the display device in the present invention is moved at double the conventional mouse cursor moving speed.

It is understood from the foregoing that, according to the mouse cursor moving method in the document preparing system of the present invention, as the mouse moving amount is greater, the mouse cursor moving amount is further increased as compared with the conventional method.

As thus described, the document preparing system according to the present invention comprises: input processing means for detecting the per-unit-time moving amount of a clicking input device such as mouse and for supplying information to be used for calculation for correction; correction means for executing a calculation for correction based on information supplied from the input processing means and for supplying a corrective value; and mouse cursor moving amount calculation means for calculating the per-unit-time moving amount of a mouse cursor by addition of the corrective value to the per-unit-time mouse moving amount.

With such arrangement, the mouse cursor may be precisely designated and positioned in a fine area on the display device by operating the mouse slowly and finely, while the mouse may be quickly moved to a remote position so that the per-unit-time mouse cursor moving amount is increased, enabling the mouse cursor to be quickly moved to the desired position. This enables the mouse to be smoothly operated. Further, a changeover of the mouse cursor moving amount may be achieved quite naturally and smoothly with no particular operation required. This gives the operator a good mouse operation feeling.

## Claims

1. A document preparing system for controlling movement of a cursor on the screen of a display device in dependence upon movement on a surface of a user-manipulable input device including a clicking input device such as a mouse, the system comprising:

   input processing means (2) for detecting the per-unit-time moving amount of the input device as an integer number m;

   correction calculation means (3) for calculating a correction value according to the equation:

   $$\Sigma\ m_i \text{ for } m_i > 0,$$

   where $m_i = m - iN$, $i = 1, 2, 3, \ldots$ and N is a predetermined threshold value of said per-unit-time device moving amount m, said correction value being zero for $m \leq N$; and

   cursor moving amount calculation means (4) for calculating the per-unit-time moving amount of said cursor on the display screen by addition of said correction value to said per-unit-time device moving amount m.

2. A document preparing system according to claim 1, further comprising:

   cursor display processing means (5) for calculating the position on the display screen to which the cursor is to be moved according to the per-unit-time cursor moving amount supplied by said cursor moving amount calculation means (4) and the position of the cursor immediately before said input device is operated.

3. A document preparing system according to claim 1 or claim 2, further comprising:

   a mouse (1) including a clicking input device as said input device.

4. A document preparing system according to any one of claims 1 to 3, further comprising:

   a display device (6) for displaying said cursor.

5. A document preparing system according to any one of the preceding claims, further comprising:

   a pulse generator for supplying pulses having a predetermined frequency and a counter for counting the number of said pulses to determine said per-unit-time moving amount of the input device.

6. A method for controlling movement of a cursor on the screen of a display device in dependence upon the movement on a surface of a user-manipulable input device including a clicking input device such as a mouse, the method comprising the steps of:

detecting the per-unit-time moving amount of the input device as an integer number m;

calculating a correction value according to the equation:

$$\Sigma\ m_i\ \text{for}\ m_i > 0,$$

where $m_i = m - iN$, $i = 1, 2, 3 \ldots$ and N is a predetermined threshold value of said per-unit-time device moving amount m, said correction value being zero for $m \leq N$; and

calculating the per-unit-time moving amount of said cursor on the display screen by addition of said correction value to said per-unit-time device moving amount m.

**Patentansprüche**

1.  Dokumentenverarbeitungssystem zur Bewegungssteuerung eines Cursors auf dem Bildschirm einer Anzeigevorrichtung in Abhängigkeit von der Bewegung einer durch einen Benutzer auf einer Fläche zu manipulierenden Eingabeeinrichtung, die eine durch Klicken zu betätigende Auslöseeinrichtung, beispielsweise eine Maus, aufweist mit folgenden Merkmalen:

    eine Eingabeverarbeitungseinrichtung (2) zum Erfassen der Bewegung der Eingabeeinrichtung pro Zeiteinheit als ganzzahlige Größe m;

    eine Korrekturberechnungseinheit (3) zum Berechnen eines Korrekturwerts entsprechend der Gleichung:

    $$\Sigma\ m_i\ \text{mit}\ m_i > 0,$$

    worin gilt $m_i = n - iN$, $i = 1, 2, 3, \ldots$ und N einen vorgebbaren Schwellenwert für den Betrag m des Verschiebebetrags pro Zeiteinheit der Eingabeeinrichtung bezeichnet, wobei der Korrekturwert für $m \leq N$ null ist; und

    eine Berechnungseinheit (4) für den Cursorverschiebebetrag pro Zeiteinheit auf dem Anzeigeschirm durch Addieren des Korrekturwerts zum Verschiebebetrag m der Eingabeeinrichtung pro Zeiteinheit.

2.  Dokumentenverarbeitungssystem nach Anspruch 1 mit:

    einer Verarbeitungseinheit (5) für die Cursoranzeige zum Berechnen der Position auf dem Anzeigeschirm, zu welcher der Cursor entsprechend dem durch die Cursorverschiebebetrag-Berechnungseinheit (4) pro Zeiteinheit gelieferten Verschiebebetrag zu verschieben ist sowie der Position des Cursors unmittelbar bevor die Eingabeeinrichtung betätigt wird.

3.  Dokumentenverarbeitungssystem nach Anspruch 1 oder 2 mit einer Maus (1), die eine durch Klicken zu betätigende Auslösevorrichtung umfaßt.

4.  Dokumentenverarbeitungssystem nach einem der Ansprüche 1 bis 3 mit einer Anzeigevorrichtung (6) zum Anzeigen des Cursors.

5.  Dokumentenverarbeitungssystem nach einem der vorstehenden Ansprüche mit einem Pulsgenerator, der Pulse vorgebbarer Frequenz liefert sowie mit einem Zähler, der zum Bestimmen des Verschiebebetrags der Eingabeeinrichtung pro Zeiteinheit die Anzahl der Pulse zählt.

6.  Verfahren zur Bewegungssteuerung eines Cursors auf dem Anzeigeschirm einer Anzeigevorrichtung in Abhängigkeit von der Bewegung einer durch einen Benutzer zu manipulierenden Eingabeeinrichtung auf einer Fläche, die eine durch Klicken zu betätigende Auslöseeinrichtung, beispielsweise eine Maus, umfaßt, mit folgenden Verfahrensschritten:

    Erfassen des Verschiebebetrags der Eingabeeinrichtung pro Zeiteinheit als ganzzahlige Größe m;

    Berechnen eines Korrekturwerts entsprechend der Gleichung:

    $$\Sigma\ m_i\ \text{mit}\ m_i > 0,$$

    worin für $m_i = m - iN$, $i = 1, 2, 3 \ldots$ gilt und N einen vorgebebaren Schwellenwert für den verschiebebetrag m pro Zeiteinheit für die Eingabeeinrichtung angibt und der Korrekturwert für $m \leq N$ null beträgt; und

    Berechnen des Verschiebebetrags des Cursors auf dem Anzeigeschirm pro Zeiteinheit durch Addition des Korrekturwerts zu dem Verschiebebetrag m pro Zeiteinheit der Eingabeeinrichtung.

**Revendications**

1.  Système de préparation de documents pour commander le déplacement d'un curseur sur l'écran d'un dispositif d'affichage en fonction du déplacement sur une surface d'un dispositif d'entrée manipulable par l'utilisateur, comprenant un dispositif d'entrée à déclic, tel qu'une souris, le système comprenant :

un moyen de traitement d'entrée (2) pour détecter la grandeur de déplacement par unité de temps du dispositif d'entrée, en tant qu'un nombre entier m ;

un moyen de calcul de correction (3) pour calculer une valeur de correction selon l'équation :

$$\Sigma\ m_i \text{ pour } m_i > 0,$$

où $m_i$ = m - iN, i = 1, 2, 3, ... et N est une valeur de seuil prédéterminée de ladite grandeur de déplacement m du dispositif d'entrée par unité de temps, ladite valeur de correction étant zéro pour m ≤ N ; et

un moyen de calcul de grandeur de déplacement de curseur (4) pour calculer la grandeur de déplacement par unité de temps dudit curseur sur l'écran d'affichage, par addition de ladite valeur de correction à ladite grandeur de déplacement m du dispositif par unité de temps.

2. Système de préparation de documents selon la revendication 1, comprenant en outre:

un moyen de traitement d'affichage de curseur (5) pour calculer la position sur l'écran d'affichage vers laquelle le curseur doit être déplacé en fonction de la grandeur de déplacement de curseur par unité de temps, fournie par ledit moyen de calcul de grandeur de déplacement de curseur (5), et la position du curseur immédiatement avant l'actionnement dudit dispositif d'entrée.

3. Système de préparation de documents selon la revendication 1 ou la revendication 2, comprenant en outre :

une souris (1) comprenant un dispositif d'entrée à déclic constituant ledit dispositif d'entrée.

4. Système de préparation de documents selon l'une quelconque des revendications 1 à 3, comprenant en outre :

un dispositif d'affichage (6) pour afficher ledit curseur.

5. Système de préparation de documents selon l'une quelconque des revendications précédentes, comprenant en outre :

un générateur d'impulsions pour fournir des impulsions ayant une fréquence prédéterminée, et un compteur pour compter le nombre desdites impulsions pour déterminer la grandeur de déplacement du dispositif d'entrée par unité de temps.

6. Procédé pour commander le déplacement d'un curseur sur l'écran d'un dispositif d'affichage en fonction du déplacement sur une surface d'un dispositif d'entrée manipulable par l'utilisateur, comprenant un dispositif d'entrée à déclic, tel qu'une souris, le procédé comprenant les étapes consistant à :

détecter la grandeur de déplacement par unité de temps du dispositif d'entrée, en tant qu'un nombre entier m ;

calculer une valeur de correction selon l'équation :

$$\Sigma\ m_i \text{ pour } m_i > 0,$$

où $m_i$ = m - iN, i = 1, 2, 3 ... et N est une valeur de seuil prédéterminée de ladite grandeur de déplacement m du dispositif par unité de temps, ladite valeur de correction étant zéro pour m ≤ N ; et

calculer la grandeur de déplacement par unité de temps dudit curseur sur l'écran d'affichage, par addition de ladite valeur de correction à ladite grandeur de déplacement m du dispositif par unité de temps.

# FIG. 1

# FIG. 2

# FIG.3 (a)

# FIG. 3 (b)